# EUROPÄISCHE PATENTSCHRIFT

(11) **EP 0 692 405 B1**
(45) Veröffentlichungstag und Bekanntmachung des Hinweises auf die Patenterteilung: **15.09.1999**
(21) Anmeldenummer: 95108692.5
(22) Anmeldetag: 07.06.1995
(51) Int. Cl.: B60Q 1/076

(54) **Einstellsystem für einen Reflektor eines Fahrzeug-Scheinwerfers**
Positioning device for a vehicle headlamp reflector
Dispositif de positionnement du réflecteur d'un phare de véhicule

(30) Priorität: 15.06.1994 DE 4420779
(43) Veröffentlichungstag der Anmeldung: 17.01.1996
(73) Patentinhaber: Hella KG Hueck & Co., 59552 Lippstadt (DE)
(72) Erfinder: Eickhoff, Willi, D-59581 Warstein (DE); Stumpe, Gerhard, D-59558 Lippstadt (DE)

(56) Entgegenhaltungen:
- EP-A- 0 384 838
- DE-A- 3 915 300
- DE-A- 4 204 097
- GB-A- 2 283 556

## Beschreibung

Die Erfindung betrifft ein Einstellsystem für einen Reflektor eines Fahrzeug-Scheinwerfers mit einer manuell und elektromotorisch verstellbaren Verstellvorrichtung, mit einem die elektromotorische Verstellvorrichtung aufnehmenden Gehäuse und mit einem Verstellbolzen, welcher sowohl manuell als auch elektromotorisch in Richtung seiner Langsachse verstellbar ist, und welcher mit einem aus dem Gehäuse herausragenden Endabschnitt mit dem Reflektor koppelbar ist, während der andere Endabschnitt in eine Sackbohrung einer Nabe eines Zahnrades verschiebbar eingreift und drehfest mit dem Zahnrad verbunden ist, welches in einen Hohlzylinder umlaufend dicht eingesetzt ist und mittels eines stabförmigen Hilfswerkzeuges manuell verdrehbar ist.

Ein solches Einstellsystem für einen Reflektor eines Fahrzeug-Scheinwerfers mit einer manuell und elektromotorisch betätigbaren Verstellvorrichtung ist aus der DE 42 04 097 A1 bekannt. Ein aus Kunststoff bestehendes topfförmiges Scheinwerfergehäuse ist durch eine schalenförmige lichtdurchlässige Abschlußscheibe abgeschlossen. In den von dem Scheinwerfergehäuse und der Abschlußscheibe gebildeten Innenraum ist ein schalenförmiger Reflektor eingesetzt, welcher um eine horizontale und vertikale Achse schwenkbar ist. Der Reflektor ist um die horizontale Achse durch die manuelle und elektromotorische Verstellvorrichtung verschwenkbar. Die manuelle Verstellvorrichtung und die elektromotorische Verstellvorrichtung sind jeweils in einem eigenen Zweiteiligen Gehäuse untergebracht. Das zweiteilige Gehäuse der elektromotorischen Verstellvorrichtung ist an der Innenseite des topfförmigen Scheinwerfergehäuses befestigt. Aus dem Zweiteiligen Gehäuse der elektromotorischen Verstellvorrichtung ragt ein Verstellbolzen mit beiden Endabschnitten heraus. Einer der beiden Endabschnitte ist gelenkig mit dem Reflektor verbunden, während der andere Endabschnitt zur Rückseite des Scheinwerfergehäuses weist. Um den letzteren Endabschnitt des Verstellbolzens verläuft in einem Abstand ein Kragen, welcher an das zweiteilige Gehäuse der elektromotorischen Verstellvorrichtung angeformt ist. Das zweiteilige Gehäuse der manuellen Verstellvorrichtung besteht aus einem einstückig mit dem Scheinwerfergehäuse hergestellten Hohlzylinder und einer den Hohlzylinder nach außen hin abdeckenden Kappe. In den Hohlzylinder greift der Kragen des zweiteiligen Gehäuses der elektromotorischen Verstellvorrichtung mit wenig Spiel ein. Nur eine enge Tolerierung zwischen dem Kragen und dem Hohlzylinder sichert ein leichtgängiges und ruckfreies Verstellen beider Verstellvorrichtungen. An die Innenseite des Hohlzylinders ist eine umlaufende Schulter angeformt, an welcher sich ein von der Rückseite des Scheinwerfergehäuses her in den Hohlzylinder eingesetztes Zahnrad unter Zwischenschaltung einer Ringdichtung abstützt. Das Zahnrad ist ein aus Blech hergestelltes Kronrad, welches mit seinen Zähnen zur Rückseite des Scheinwerfers hin weist. Das Kronrad und seine Nabe sind zweiteilig ausgeführt. Die drehfest mit dem Kronrad ausgeführte Habe ist aus Kunststoff hergestellt, erstreckt sich, ausgehend vom Kronrad, zum Reflektor hin und weint ein zum Reflektor hin geöffnetes Sackloch auf. Der eine Endabschnitt des Verstellbolzens greift in das Sackloch verschiebbar ein und weist wie das Sackloch zwei Abflachungen auf, durch welche der Verstellbolzen und die Habe des Zahnrades drehfest miteinander verbunden sind. In die auf den Hohlzylinder aufgesetzte Kappe ist eine radial zur Längsachse des Verstellbolzens verlaufende Welle eingesetzt, welche im Inneren der Kappe ein Stirnzahnrad trägt, welches mit seinen Zähnen in die Zähne des Großrades eingreift. Ein aus der Kappe nach außen ragender Endabschnitt der Welle weist eine Drehvorrichtung auf, durch welche ein stabformiges Hilfswerkzeug in einen drehfesten Eingriff mit der Welle bringbar ist. Das stabförmige Hilfswerkzeug kann ein Kreuzschlitz-Schraubendreher sein. Da die manuelle und elektromotorische Verstellvorrichtung jeweils ein eigenes zweiteiliges Gehäuse aufweisen und die manuelle Verstellvorrichtung aus sehr vielen Einzelteilen besteht, ist deren Herstellung sehr kostenintensiv und ihre Montage umständlich und zeitaufwendig. Außerdem ist die manuelle Verstellvorrichtung nur aus einer einzigen Richtung mittels des stabförmigen Hilfswerkzeuges verdrehbar. Bei einem Verdrehen des stabförmigen Hilfswerkzeuges um seine Längsachse kämmt das Stirnzahnrad in den Zähnen des Kronrades. Dadurch dreht sich der drehfest mit dem Kronrad verbundene Verstellbolzen um seine Längsachse und verstellt sich in Richtung seiner Längsachse, da er am Reflektor in eine Mutter eingreift. Dabei verschiebt sich der Verstellbolzen mit einem Endabschnitt in dem Sackloch der Nabe des Kronrades. Bei einer Betätigung der elektromotorischen Verstellvorrichtung verstellt ein in das zweiteilige Gehäuse eingesetzter Elektromotor unter Zwischenschaltung eines Getriebes den Verstellbolzen in Richtung seiner Längsachse. Hierbei verschiebt sich ebenfalls der eine Endabschnitt des Verstellbolzens in dem Sackloch der Nabe des Kronrades. Sind die Längsachse der Nabe und die Längsachse des Verstellbolzens nicht genau zueinander ausgerichtet, so muß bei beiden Verstellvorrichtungen eine größere Verstellkraft aufgewendet werden. Dies ist besonders bei der elektromotorischen Verstellvorrichtung nachteilig, weil deren Verstellkraft meist sehr klein ist und somit bei einer auftretenden radialen Kraft keine automatische Verstellung mehr durch die elektromotorische Verstellvorrichtung erfolgt.

Aufgabe der Erfindung ist es, ein Einstellsystem für einen Reflektor eines Fahrzeug-Scheinwerfers derart auszuführen, daß die beiden Verstellvorrichtungen einfach und leicht und auch nachträglich an einem Fahrzeug-Scheinwerfer montierbar sind und zusammen aus möglichst wenigen zusätzlichen Einzelteilen bestehen. Außerdem soll die manuelle Verstellvorrichtung mittels eines stabförmigen Hilfswerkzeuges aus mehreren Richtungen verstellbar sein und weiterhin der Innenraum des Scheinwerfergehäuses als auch die elektromotorische Verstellvorrichtung gegen Schmutz und Spritzwasser geschützt sein. Diese Aufgabe wird nach der Erfindung dadurch gelöst, daß
- der das Zahnrad aufnehmende Hohlzylinder
   - einstückig mit einem Deckel des Gehäuses ausgeführt ist, von dem Deckel nach außen absteht, an seinem vom Deckel wegweisenden Randabschnitt einen Boden mit einer zentral liegenden Lageröffnung aufweist, welcher an die Nabe des Zahnrades drehbar und axial festsitzend gehalten ist und
   - mit mehreren öffnungen versehen ist, welche zum Hindurchführen des stabförmigen Hilfswerkzeuges dienen, das beim Drehen um seine Längsachse mit zahnartigen Vorsprüngen in den Zähnen des Zahnrades kämmt,
- der den Hohlzylinder aufweisende Deckel ein Basisteil des Gehäuses dicht abdeckt, von dem der Deckel oder das Basisteil mittels eines Befestigungselementes an dem Scheinwerfer befestigbar ist.

Dadurch weisen die manuelle und elektromotorische Verstellvorrichtung zusammen ein zweiteiliges Gehäuse auf und die elektromotorische Verstellvorrichtung ist gegen Schmutz- und Spritzwasser geschützt, obwohl für die manuelle Verstellvorrichtung außer dem dicht in den Hohlzylinder eingesetzten Zahnrad kein zusätzliches Einzelteil notwendig ist. Außerdem ist ein leichtgängiges und ruckfreies Verstellen des Verstellbolzens immer sicher, da beide Stellvorrichtungen in ein gemeinsames Gehäuse eingesetzt sind. Darüber hinaus kann das zweiteilige Gehäuse leicht und einfach an der Außenseite des Scheinwerfers befestigt werden. Das Befestigen des zweiteiligen Gehäuses an dem Scheinwerfer kann mittels eines zwischen beiden Teilen bestehenden Drehverschlusses erfolgen.

Weiterhin ist es vorteilhaft, wenn ein nach außen aus der Lageröffnung herausragender freier Endabschnitt der Nabe des Zahnrades eine Drehvorrichtung aufweist. Dadurch kann die manuelle Verstellvorrichtung auch an dieser Stelle mittels eines stabförmigen Hilfswerkzeuges betätigt werden, und trotzdem ist die elektromotorische Verstellvorrichtung weiterhin geschützt in dem zweiteiligen Gehäuse angeordnet.

Vorteilhaft ist es weiterhin, wenn die Öffnungen für das stabförmige Hilfswerkzeug radial zur Längsachse des Verstellbolzens ausgerichtet sind. Dies ist sinnvoll, weil die Verstellung des Scheinwerfers möglichst von oben her erfolgen soll.

Von Vorteil ist es weiterhin, wenn in dem Boden des Hohlzylinders, ausgehend von seiner zentralen Lageöffnung, mehrere radial nach außen verlaufende Schlitze eingebracht sind, durch welche der Boden in axial federnde Bodenabschnitte aufgeteilt ist, die mit ihrem die zentral liegende Lageöffnung begrenzenden Rand selbstrastend in eine Ringnut der Nabe eingreifen. Bei einer solchen Ausgestaltung ist das Zahnrad einfach und leicht zu montieren und trotzdem ist das Zahnrad sicher gehalten. Hierbei ist es weiterhin vorteilhaft, wenn der Boden des Hohlzylinders kegelförmig ausgeführt ist, wobei die Längsachse des Kegels mit der Längsachse des Verstellbolzens zusammenfällt und der Kegel von dem Hohlzylinder nach außen absteht. Ein solcher Kegel kann eine hohe Druckkraft in Richtung des Reflektors aufnehmen, ohne daß sich der Deckel deformiert. Eine solche Druckkraft tritt auf, wenn mittels eines stabförmigen Hilfswerkzeuges gegen die Drehvorrichtung am freien Endabschnitt der Nabe gedrückt wird.

Zudem ist es vorteilhaft, wenn die Öffnungen in dem Hohlzylinder nach außen hin in eine an die Mantelfläche des Hohlzylinders angeformte Führungshülse übergehen. Durch die Führungshülse ist ein einfaches und leichtes Verdrehen des stabförmigen Hilfswerkzeuges möglich, weil das stabförmige Hilfswerkzeug im Bereich der Führungshülse keine zahnartigen Vorsprünge aufweisen muß, welche zum Eingriff in die Zähne des Zahnrades dienen. Außerdem ist es vorteilhaft, wenn die Mantelfläche der Habe des Zahnrades zwischen dem Boden des Hohlzylinders und dem Zahnrad als Anschlag für das freie Ende des stabförmigen Hilfswerkzeuges dient. Dadurch ist auch bei einer höheren radialen Druckkraft durch das stabförmige Hilfswerkzeug keine Beschädigung der manuellen Verstellvorrichtung möglich.

Darüber hinaus ist es vorteilhaft, wenn die Nabe und das Zahnrad einstückig aus Kunststoff hergestellt sind und in die Mantelfläche des Zahnrades umlaufend eine Nut eingebracht ist, in welche eine Ringdichtung eingesetzt ist, welche dicht an der Innenseite des Hohlzylinders anliegt. Eine solche Ausgestaltung ist einfach und sehr kostengünstig herstellbar.

Weiterhin ist es vorteilhaft, wenn in den Hohlzylinder eine Wasserablauföffnung zwischen Öffnungen für das stabförmige Hilfswerkzeug eingebracht ist. Eine Wasserablauföffnung ist immer dann sinnvoll, wenn einer Öffnung für das stabförmige Hilfswerkzeug auf der ihr diametral gegenüberliegenden Seite des Hohlzylinders keine weitere Öffnung für das stabförmige Hilfswerkzeug gegenüberliegt.

Bei einer besonders vorteilhaften Weiterbildung der Erfindung ist an die Innenseite des Deckels mindestens ein in das Gehäuse sich hineinerstreckender Ansatz angeformt, welcher in eine Wandung eines sich nach außen erstreckenden Steckergehäuses des Deckels übergeht und einen elektrischen Motor der elektrischen Verstellvorrichtung gegenüber einer Grundfläche des Basisteils arretiert. Dadurch ist der Deckel sehr verwindungssteif und auch bei einem größeren Druck des Deckels gegen den elektrischen Motor ist die Funktion der beiden Verstellvorrichtungen sicher.

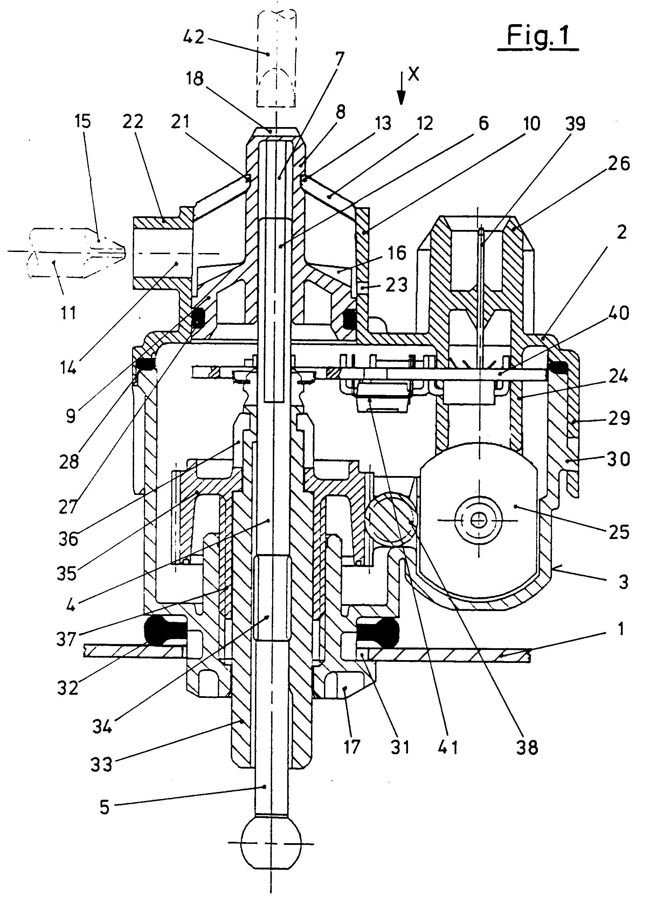

Ein Ausführungsbeispiel der Erfindung ist in der Zeichnung dargestellt, und zwar zeigt
- Figur 1: einen mittleren Längsschnitt durch eine manuelle und elektrische Verstellvorrichtung für einen Fahrzeug-Scheinwerfer und

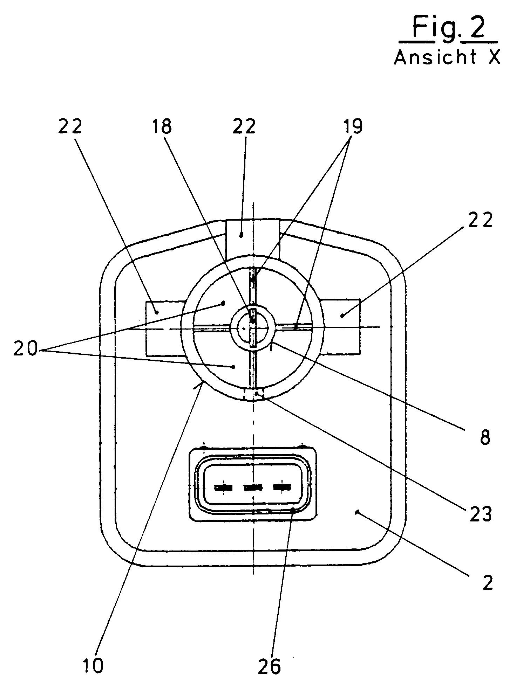

- Figur 2: eine Ansicht aus Richtung x in Figur 1.

Ein aus Kunststoff hergestelltes Gehäuse, welches aus einem topfförmigen Basisteil (3) und einem Deckel (2) besteht, dient zur Aufnahme einer manuellen und elektrischen Verstellvorrichtung für einen nicht dargestellten Reflektor eines Fahrzeug-Scheinwerfers (1). In das topfförmige Basisteil (3) ist die elektrische Verstellvorrichtung eingesetzt, während in den Deckel (2) ein Zahnrad (9) der manuellen Verstellvorrichtung eingesetzt ist. Durch die elektromotorische Verstellvorrichtung ist der Reflektor fernbetätigbar um eine horizontale Achse schwenkbar, während die manuelle Verstellvorrichtung mittels eines stabförmigen Hilfswerkzeuges (11 bzw. 42) am Scheinwerfer (1) betätigbar ist. Durch die manuelle Verstellvorrichtung ist der Reflektor ebenfalls um die horizontale Achse schwenkbar. Der Deckel (2) liegt mit seinem äußeren umlaufenden Rand unter Zwischenschaltung einer Dichtung (28) dicht an dem äußeren umlaufenden Rand des topfförmigen Basisteils (3) an und liegt mit Fahnen (29) an der Außenseite des topfförmigen Basisteils (3) an. Die Fahnen (29) hintergreifen selbstrastend eine an die Außenseite des Basisteils (3) angeformte Nase (30). Das Basisteil (3) greift an seiner Unterseite mit einem Befestigungselement (17) in eine Gehäuseöffnung (31) des Fahrzeug-Scheinwerfers (1) ein und ist mittels des Befestigungselementes (17) drehverschlußartig an dem Fahrzeug-Scheinwerfer (1) befestigt. Die Gehäuseöffnung (31) ist auf ihrer Außenseite von einer ringförmigen Gummidichtung (32) umgeben, an welcher das Basisteil (3) dicht anliegt. Durch die Gehäuseöffnung (31) verläuft mittig ein Verstellbolzen (4) hindurch, welcher mit seinem aus dem Basisteil (3) herausragenden Endabschnitt (5) zum Reflektor hin weist und mittels eines Kugelkopfes an seinem freien Ende gelenkig mit dem Reflektor verbindbar ist. Der Verstellbolzen (4) verläuft durch ein rohrförmiges Mutterteil (33) hindurch und ist in diesem mit einem Gewindeabschnitt (34) verschraubbar. Das Mutterteil (33) ist in einer Öffnung des Basisteils (3) in Richtung der Längsachse des Verstellbolzens (4) verschiebbar geführt, jedoch in der Öffnung drehfest mit dem Basisteil (3) verbunden. Auf das rohrförmige Mutterteil (33) ist ein Schneckenrad (35) aufgeschoben, welches mit federnden Armen (36) in eine Ringnut des Mutterteils (33) selbstrastend eingreift und somit gegenüber dem rohrförmigen Mutterteil (33) drehbar und in Richtung der Längsachse des Verstellbolzens (4) arretiert ist. Das Schneckenrad (35) ist mit einer hülsenförmigen Nabe (37) auf das rohrförmige Mutterteil (33) aufgeschoben. Die hülsenförmige Nabe (37) weist auf ihrer Mantelfläche ein Außengewinde auf und greift in ein Innengewinde am Boden des topfförmigen Basisteils (3) verdrehbar ein. Somit ist der Verstellbolzen (4) über das rohrförmige Mutterteil (33) und das Schneckenrad (35) axial an dem Basisteil (3) arretiert und durch Verdrehen des Schneckenrades (35) in Richtung seiner Längsachse verstellbar. Das Verdrehen des Schneckenrades (35) erfolgt durch einen elektrischen Motor (25), welcher über ein Getriebe (nicht dargestellt), mit einer in das Schneckenrad (35) eingreifenden Schnecke (38) zusammenwirkt. Der elektrische Motor (25) ist in eine Vertiefung des Bodens des topfförmigen Basisteils (3) eingesetzt und durch an die Innenseite des Deckels (2) angeformte Ansätze (24) in seiner Lage gehalten. Die Ansätze (24) gehen in die Wand eines an die Außenseite des Deckels angeformten Steckergehäuses (26) über. Die beiden Ansätze (24) und die Wand des Steckergehäuses (26) dienen somit als Versteifungsrippen für den Deckel (2). In dem Steckergehäuse (26) sind Steckerfahnen (39) angeordnet, welche mit einer in das topfförmige Basisteil (3) eingesetzten Leiterplatte (40) elektrisch kontaktieren. Die elektrische Leiterplatte (40) ist mit elektrischen Bauteilen (41) bestückt. Die Leiterplatte (40) deckt bei abgenommenen Deckel (2) weitestgehend das Innere des topfförmigen Basisteils (3) ab.

An den Deckel (2) ist außen seitlich neben dem Steckergehäuse (26) ein Hohlzylinder (10) angeformt, welcher zur Innenseite des Deckels (2) hin offen ausgeführt ist und nach außen hin durch einen Boden (12) abgeschlossen ist. Der Boden (12) weist eine zentral liegende Lageröffnung (13) auf, von welcher ausgehend in den Boden (12) radial nach außen verlaufende Schlitze (19) eingebracht sind. Durch die Schlitze (19) ist der Boden (12) in vier gleich große Bodenabschnitte (20) aufgeteilt, welche axial federnd ausgeführt sind. Von der Innenseite des Deckels (2) her ist in den Hohlzylinder (10) ein Zahnrad (9) eingesetzt, welches an seiner Mantelfläche umlaufend mit einer Ringnut versehen ist, in die eine Ringdichtung (27) eingesetzt ist. Die Ringdichtung (27) liegt umlaufend dicht an der Innenseite des Hohlzylinders (10) an. Auf der dem Boden (12) des Hohlzylinders (10) zugewandten Stirnseite des Zahnrades (9) weist das Zahnrad (9) seine Zähne (16) auf. Das Zahnrad (9) ist zusammen mit seiner Nabe (8) einstückig aus Kunststoff hergestellt. Die Habe (8) erstreckt sich ausgehend vom Zahnrad (9) zum Boden (12) hin und durch seine Lageröffnung (13) hindurch. Die Bodenabschnitte (20) des Hohlzylinders (10) greifen mit ihrem die Lageröffnung (13) begrenzenden Rand selbstrastend in eine Ringnut (21) der Nabe (8) ein. In die Nabe (8) ist von der Innenseite des Deckels (2) her gesehen ein Sackloch (7) eingebracht. Der nach außen aus der Lageröffnung (13) des Bodens (12) herausragende Endabschnitt der Nabe (8) weist an seiner Stirnseite eine Drehvorrichtung (18) auf. Die Drehvorrichtung (18) ist ein radial zur Längsachse des Verstellbolzens (4) verlaufender Schlitz, welcher in die Stirnfläche der Nabe (8) eingebracht ist. Dadurch kann das Zahnrad mittels des stabförmigen Hilfswerkzeuges (42), welches an seinem freien Ende keilförmig ausgeführt ist, um seine Längsachse verdreht werden. Hierbei fallen die Längsachsen des stabförmigen Hilfswerkzeuges (42) und des Verstellbolzens (4) zusammen. In den Hohlzylinder (10) sind zwischen dem Boden (12) und dem Zahnrad (9) drei Öffnungen (14) eingebracht, welche nach außen hin in eine an den Hohlzylinder (10) angeformte Führungshülse (22) übergehen. Die Längsachsen der Führungshülsen (22) verlaufen radial zur Längsachse des Verstellbolzens (4) und stehen jeweils in einem rechten Winkel zueinander. In die dem Steckergehäuse (26) benachbarte Seite des Hohlzylinders (10) ist eine Wasserablauföffnung (23) eingebracht. Somit ist bei jeder Anbaulage sichergestellt, daß sich kein Wasser in dem Raum zwischen dem Boden (12) und dem Zahnrad (9) ansammeln kann. Durch die Führungshülsen (22) ist ein stabförmiges Hilfswerkzeug (11) hindurchführbar bis sein freies Ende an die Mantelfläche der Nabe (8) anschlägt. In dieser Stellung greift das stabförmige Hilfswerkzeug (11) mit zahnartigen Vorsprüngen (15) an seinem freien Endabschnitt in die Zähne (16) des Zahnrades (9) ein. Das stabförmige Hilfswerkzeug (11) kann ein Kreuzschlitz-Schraubendreher sein. Beim Drehen des stabförmigen Hilfswerkzeuges (11) kämmen seine zahnartigen Vorsprünge (15) in den Zähnen (16) des Zahnrades (9). Beim Drehen des Zahnrades (9) um seine Längsachse dreht sich der Verstellbolzen (4) mit, da dieser mit einem in das Sacklock (7) der Nabe (8) eingreifenden Endabschnitt (6) drehfest mit dem Zahnrad (9) und axial verschiebbar in dem Sacklock (7) angeordnet ist. Das Zahnrad (9) und der Verstellbolzen (4) sind drehfest miteinander verbunden, weil der Endabschnitt (6) des Verstellbolzens (4) und das Sacklock (7) mit Abflachungen versehen sind. Bei einem Verdrehen des Verstellbolzens (4) bewegt sich dieser in Richtung seiner Längsachse, da sein Gewindeabschnitt (34) in das Innengewinde des rohrförmigen Mutterteils (33) eingreift. Somit ist der Reflektor sowohl durch die manuelle Verstellvorrichtung als auch elektromotorische Verstellvorrichtung um die horizontale Achse des Fahrzeug-Scheinwerfers (1) schwenkbar.

### Bezugszeichenliste

### Einstellsystem für einen Reflektor eines Fahrzeug-Scheinwerfers

- 1: Scheinwerfer
- 2: Deckel
- 3: Basisteil
- 4: Verstellbolzen
- 5: Endabschnitt
- 6: Endabschnitt
- 7: Sackloch
- 8: Nabe
- 9: Zahnrad
- 10: Hohlzylinder
- 11: Hilfswerkzeug
- 12: Boden
- 13: Lageröffnung
- 14: Öffnung
- 15: Vorsprung
- 16: Zähne
- 17: Befestigungselement
- 18: Drehvorrichtung
- 19: Schlitz
- 20: Bodenabschnitt
- 21: Ringnut
- 22: Führungshülse
- 23: Wasserablauföffnung
- 24: Ansatz
- 25: Motor
- 26: Steckergehäuse
- 27: Ringdichtung
- 28: Dichtung
- 29: Fahne
- 30: Nase
- 31: Gehäuseöffnung
- 32: Gummidichtung
- 33: Mutterteil
- 34: Gewindeabschnitt
- 35: Schneckenrad
- 36: Arm
- 37: Nabe
- 38: Schnecke
- 39: Steckerfahne
- 40: Leiterplatte
- 41: Bauteil
- 42: Hilfswerkzeug

## Patentansprüche

1. Einstellsystem für einen Reflektor eines Fahrzeug-Scheinwerfers mit einer manuell und elektromotorisch betätigbaren Verstellvorrichung, mit einem die elektromotorische Verstellvorrichtung aufnehmbaren Gehäuse und mit einem Verstellbolzen (4), welcher sowohl manuell als auch elektromotorisch in Richtung seiner Längsachse verstellbar ist, und welcher mit einem aus dem Gehäuse herausragenden Endabschnitt (5) mit dem Reflektor koppelbar ist, während der andere Endabschnitt (6) in ein Sackloch (7) einer Nabe (8) eines Zahnrades (9) verschiebbar eingreift und drehfest mit dem Zahnrad (9) verbunden ist, welches in einen Hohlzylinder (10) umlaufend dicht eingesetzt ist und mittels eines stabförmigen Hilfswerkzeuges (11) manuell drehbar ist, dadurch gekennzeichnet, daß
- der das Zahnrad (9) aufnehmende Hohlzylinder (10)
- einstückig mit einem Deckel (2) des Gehäuses ausgeführt ist,
- von dem Deckel (2) nach außen absteht,
- an seinem vom Deckel (2) wegweisenden Randabschnitt einen Boden (12) mit einer zentral liegenden Lageröffnung (13) aufweist, in welcher die Nabe (8) des Zahnrades (9) drehbar und axial festsitzend gehalten ist und
- mit mehreren Öffnungen (14) versehen ist, welche zum Hindurchführen des stabförmigen Hilfswerkzeuges (11) dienen, das beim Drehen um seine Längsachse mit zahnartigen Vorsprüngen (15) in den Zähnen (16) des Zahnrades (9) kämmt,
- der den Hohlzylinder (10) aufweisende Deckel (2) ein Basisteil (3) des Gehäuses dicht abdeckt, von dem der Deckel (2) oder das Basisteil (3) mittels eines Befestigungselementes (17) an dem Scheinwerfer befestigbar ist.

2. Einstellsystem nach Anspruch 1, dadurch gekennzeichnet, daß ein nach außen aus der Lageröffnung (13) herausragender freier Endabschnitt der Nabe (8) des Zahnrades (9) eine Drehvorrichtung (18) aufweist.

3. Einstellsystem nach Anspruch 1 oder 2, dadurch gekennzeichnet, daß die Öffnungen (14) für das stabförmige Hilfswerkzeug (11) radial zur Längsachse des Verstellbolzens (4) ausgerichtet sind.

4. Einstellsystem nach einem der Ansprüche 1 bis 3, dadurch gekennzeichnet, daß in den Boden (12) des Hohlzylinders (10) ausgehend von seiner zentral liegenden Lageröffnung (13) mehrere radial nach außen verlaufende Schlitze (19) eingebracht sind, durch welche der Boden (12) in axial federnde Bodenabschnitte (20) aufgeteilt ist, die mit ihrem die zentral liegende Lageröffnung (13) begrenzenden Rand selbstrastend in eine Ringnut (21) der Nabe (8) eingreifen.

5. Einstellsystem nach einem der Ansprüche 1 bis 4, dadurch gekennzeichnet, daß der Boden (12) des Hohlzylinders (10) kegelförmig ausgeführt ist, wobei die Längsachse des Kegels mit der Längsachse des Verstellbolzens (4) zusammenfällt und der Kegel von dem Hohlzylinder (10) nach außen absteht.

6. Einstellsystem nach einem der Ansprüche 1 bis 5, dadurch gekennzeichnet, daß die Öffnungen (14) in dem Hohlzylinder (10) nach außen hin in eine an die Mantelfläche des Hohlzylinders (10) angeformte Führungshülse (22) übergehen.

7. Einstellsystem nach einem der Ansprüche 1 bis 6, dadurch gekennzeichnet, daß die Mantelfläche der Nabe (8) des Zahnrades (9) zwischen dem Boden (12) des Hohlzylinders (10) und dem Zahnrad (9) als Anschlag für das freie Ende des stabförmigen Hilfswerkzeuges (11) dient.

8. Einstellsystem nach einem der Ansprüche 1 bis 7, dadurch gekennzeichnet, daß die Nabe (8) und das Zahnrad (9) einstückig aus Kunststoff hergestellt sind und in die Mantelfläche des Zahnrades (9) umlaufend eine Ringnut eingebracht ist, welche zur Aufnahme einer Ringdichtung (27) dient.

9. Einstellsystem nach einem der Ansprüche 1 bis 8, dadurch gekennzeichnet, daß in den Hohlzylinder (10) eine Wasserablauföffnung (23) zwischen öffnungen (14) eingebracht ist.

10. Einstellsystem nach einem der Ansprüche 1 bis 9, dadurch gekennzeichnet, daß an die Innenseite des Deckels (2) mindestens ein in das Gehäuse sich hineinerstreckender Ansatz (24) angeformt ist, welcher nahe einer Wandung eines sich nach außen erstreckenden Steckergehäuses (26) des Deckels (2) angeordnet ist und einen elektrischen Motor (25) der elektrischen Verstellvorrichtung gegenüber einer Grundfläche des Basisteils (3) arretiert.

## Claims

1. Adjustment system for a reflector on a vehicle headlamp, having an adjusting device adapted to be operated manually and by an electric motor, a housing adapted to accommodate the electromotive adjusting device, and an adjusting pin (4) which is adapted to be adjusted both manually and by an electric motor in the direction of its longitudinal axis, and which is adapted to be coupled to the reflector by an end portion (5) which projects out of the housing, whereas the other end portion (6) engages in a displaceable manner in a blind hole (7) of a hub (8) of a toothed wheel (9) and is joined in a manner locked against rotation to the toothed wheel (9), which is tightly inserted all round into a hollow cylinder (10) and can be rotated manually by means of a rod-shaped ancillary tool (11), characterised in that
- the hollow cylinder (10) which accommodates the toothed wheel (9)
- is constructed in one piece with a cover (2) of the housing,
- juts outwards from the cover (2),
- on its peripheral portion facing away from the cover (2) has a floor (12) with a centrally situated bearing opening (13) in which the hub (8) of the toothed wheel (9) is retained in a rotative and axially fixed manner, and
- is provided with a plurality of openings (14) which are used to guide through the rod-shaped ancillary tool (11) which meshes with tooth-like projections (15) in the teeth (16) of the toothed wheel (9) as it is rotated about its longitudinal axis,
- the cover (2) incorporating the hollow cylinder (10) tightly covers a base part (3) of the housing, of which the cover (2) or the base part (3) is adapted to be attached to the headlamp by means of an attachment element (17).

2. Adjustment system according to claim 1, characterised in that a free end portion of the hub (8) of the toothed wheel (9), which portion projects outwards from the bearing opening (13), incorporates a slewing mechanism (18).

3. Adjustment system according to claim 1 or 2, characterised in that the openings (14) for the rod-shaped ancillary tool (11) are orientated radially to the longitudinal axis of the adjusting pin (4).

4. Adjustment system according to any of claims 1 to 3, characterised in that incorporated into the floor (12) of the hollow cylinder (10), starting from the centrally situated bearing opening (13) thereof, are a plurality of radially outwardly extending slots (19) which divide the floor (12) into axially flexing floor sections (20) which by their edge delimiting the centrally situated bearing opening (13) engage in a self-locking manner in an annular groove (21) on the hub (8).

5. Adjustment system according to any of claims 1 to 4, characterised in that the floor (12) of the hollow cylinder (10) is a conical construction, the longitudinal axis of the cone coinciding with the longitudinal axis of the adjusting pin (4) and the cone jutting outwards from the hollow cylinder (10).

6. Adjustment system according to any of claims 1 to 5, characterised in that the openings (14) in the hollow cylinder (10) merge towards the outside into a guide sleeve (22) formed on the generated surface of the hollow cylinder (10).

7. Adjustment system according to any of claims 1 to 6, characterised in that the generated surface of the hub (8) of the toothed wheel (9) between the floor (12) of the hollow cylinder (10) and the toothed wheel (9) serves as a limit stop for the free end of the rod-shaped ancillary tool (11).

8. Adjustment system according to any of claims 1 to 7, characterised in that the hub (8) and the toothed wheel (9) are produced in one piece from plastic, and incorporated all around the generated surface of the toothed wheel (9) is an annular slot which is used to receive a ring seal (27).

9. Adjustment system according to any of claims 1 to 8, characterised in that incorporated in the hollow cylinder (10) is a water run-off opening (23) between openings (14).

10. Adjustment system according to any of claims 1 to 9, characterised in that formed on the inner face of the cover (2) is at least one shoulder (24) which extends into the housing and which is disposed close to one wall of an outwardly extending plug enclosure (26) on the cover (2) and locks an electric motor (25) belonging to the electrical adjustment mechanism in relation to a bottom surface of the base part (3).

## Revendications

1. Système de réglage pour un réflecteur d'un phare de véhicule, comportant un mécanisme de réglage manoeuvrable par un moteur électrique, un boîtier pouvant recevoir le mécanisme de réglage par moteur électrique et une broche de réglage (4) que l'on peut déplacer selon son axe longitudinal aussi bien manuellement qu'à l'aide d'un moteur électrique et qui, par un tronçon d'extrémité (5) sortant hors du boîtier, peut se coupler avec le réflecteur, tandis que l'autre tronçon d'extrémité (6) s'engage, avec liberté de coulissement, dans un trou borgne (7) d'un moyeu (8) d'un pignon denté (9) et est relié, sans liberté de rotation relative, avec le pignon denté (9) qui est inséré, avec étanchéité périphérique, dans un cylindre creux (10) et que l'on peut faire tourner manuellement au moyen d'un outil auxiliaire (11) en forme de tige,
caractérisé par le fait que
- le cylindre creux (10) qui reçoit le pignon denté (9)
- est réalisé d'une pièce avec un couvercle (2) du boîtier,
- saille du couvercle (2) vers l'extérieur,
- présente, à son tronçon de bordure opposé au couvercle (2), un fond (12) présentant une ouverture située au centre (13), formant portée, dans laquelle le moyeu (8) du pignon denté (9) peut tourner et est maintenu en position fixe dans le sens axial et
- présente plusieurs ouvertures (14) qui servent au passage de l'outil auxiliaire, en forme de tige, (11) qui, par rotation autour de son axe longitudinal, engrène, par des nervures en forme de dents (15), dans les dents (16) du pignon denté (9),
- le couvercle (2) présentant le cylindre creux (10) recouvre, avec étanchéité, une base (3) du boîtier dont le couvercle (2) ou la base (3) peut se fixer au phare au moyen d'un élément de fixation (17).

2. Système de réglage selon la revendication 1, caractérisé par le fait qu'un tronçon d'extrémité, libre, sortant, vers l'extérieur, hors de l'ouverture (13), formant portée, du moyeu (8) du pignon denté (9) présente un mécanisme de rotation (18).

3. Système de réglage selon la revendication 1 ou 2, caractérisé par le fait que les ouvertures (14) prévues pour l'outil auxiliaire en forme de tige (11) sont orientées radialement par rapport à l'axe longitudinal de la broche de réglage (4).

4. Système de réglage selon l'une des revendications 1 à 3, caractérisé par le fait que, dans le fond (12) du cylindre creux (10), partant de son ouverture (13) située au centre et formant portée, sont réalisées plusieurs fentes (19) qui sont orientées radialement vers l'extérieur et au moyen desquelles le fond (12) est divisé en tronçons (20) qui présentent une élasticité dans le sens radial et qui, par leur bord limitant l'ouverture (13), située au centre et formant portée, viennent s'auto-cranter dans une rainure annulaire (21) du moyeu (8).

5. Système de réglage selon l'une des revendications 1 à 4, caractérisé par le fait que le fond (12) du cylindre creux (10) est réalisé en forme de cône, l'axe longitudinal du cône coïncidant avec l'axe longitudinal de la broche de réglage (4) et le cône dépassant à l'extérieur depuis le cylindre creux (10).

6. Système de réglage selon l'une des revendications 1 à 5, caractérisé par le fait que les ouvertures (14) prévues dans le cylindre creux (10) se convertissent, à l'extérieur, en une douille de guidage (22) venue de moulage sur la surface périphérique du cylindre creux (10).

7. Système de réglage selon l'une des revendications 1 à 6, caractérisé par le fait que la surface périphérique du moyeu (8) du pignon denté (9), entre le fond (12) du cylindre creux (10) et le pignon denté (9), sert de butée pour l'extrémité libre de l'outil auxiliaire en forme de tige (11).

8. Système de réglage selon l'une des revendications 1 à 7, caractérisé par le fait que le moyeu (8) et le pignon denté (9) sont fabriqués d'une pièce en plastique et que dans la surface périphérique du pignon denté (9), tout autour, est réalisée une rainure annulaire qui sert à recevoir une garniture d'étanchéité annulaire (27).

9. Système de réglage selon l'une des revendications 1 à 8 caractérisé par le fait que dans le cylindre creux (10) est réalisée, entre les ouvertures (14), une ouverture (23) d'évacuation de l'eau.

10. Système de réglage selon l'une des revendications 1 à 9, caractérisé par le fait que sur la face intérieure du couvercle (2) est venu de moulage au moins un appendice (24) qui s'étend dans le boîtier, qui est disposé près d'une paroi d'une fiche (26) du couvercle (2) s'étendant vers l'extérieur et qui bloque contre une surface de fond de la base (3) un moteur électrique (25) du mécanisme électrique de réglage.
